# EUROPEAN PATENT APPLICATION

(11) **EP 3 316 451 A1**
(43) Date of publication of application: **02.05.2018**
(21) Application number: 17198058.4
(22) Date of filing: 24.10.2017
(51) Int. Cl.: H02K 1/14, H02K 37/14

(54) **MOTOR DEVICE**

(30) Priority: 31.10.2016 JP 2016213758
(71) Applicant: TGK CO., Ltd., Tokyo 193-0942 (JP)
(72) Inventor: FUJIMOTO, Kazuhiro, Tokyo, 193-0942 (JP); SANNOMIYA, Takashi, Tokyo, 193-0942 (JP)
(74) Representative: Schröer, Gernot H.

(57) **Abstract**

A motor device includes a stator core (26), and a positioning structure that positions the stator core (26). The stator core (26) is constituted by multiple core members (30) arranged around a rotor (14) in circumferential directions. The core members (30) each have multiple teeth parts (36) of which the front end surfaces radially face the rotor (14). The positioning structure includes multiple positioner parts (44) that respectively abut against the multiple core members (30) to position the multiple core members (30). The multiple positioner parts (44) include first positioner parts (44-A) that each abut against a front end part of a teeth part (36) of each of core members (30) adjacent to each other in the circumferential directions.

## Description

The present invention relates to a motor device.

As a drive source for various mechanical apparatuses, a motor device provided with a stator and a rotor has been conventionally used. The stator of the motor device generally includes a stator core provided with multiple teeth parts, and multiple coils wound around the teeth parts of the stator core (see Patent Document 1, for example).

[Patent Document 1] Japanese Unexamined Patent Application Publication No. 2014-241683

The stator core may be sometimes constituted by multiple core members arranged around the rotor. In this case, since the core members are not connected to each other, they are more likely to be displaced relative to each other, compared to the case where the core members are integrally formed. Accordingly, owing to the influence of magnetic poles formed in adjacent core members by excitation, the core members may be displaced relative to each other so as to be brought closer to each other. If such relative displacement occurs, gaps between the multiple core members will be narrower, which may cause increase of leakage flux passing between the core members; accordingly, measures against the problem are required.

The present invention has been made in view of such a problem, and a purpose thereof is to provide a motor device capable of suitably managing the size of a gap between adjacent core members.

To solve the problem above, one embodiment of the present invention relates to a motor device. The motor device includes a stator core, and a positioning structure that positions the stator core. The stator core is constituted by multiple core members arranged around a rotor in circumferential directions. The core members each have multiple teeth parts of which the front end surfaces radially face the rotor. The positioning structure includes multiple positioner parts that respectively abut against the multiple core members to position the multiple core members. The multiple positioner parts include first positioner part that each abut against a front end part of a teeth part of each of core members adjacent to each other in the circumferential directions.

According to the embodiment, relative displacement of the teeth parts of adjacent core members such that they are brought closer to each other, caused by attraction acting on the teeth parts of the adjacent core members, can be certainly prevented. Therefore, the gaps between the multiple core members can be prevented from narrowing, and the sizes of the gaps can be suitably managed.

Embodiments will now be described, by way of example only, with reference to the accompanying drawings which are meant to be exemplary, not limiting, and wherein like elements are numbered alike in several Figures, in which:
Fig. 1 is a plan view that shows an internal structure of a motor device according to a first embodiment;
Fig. 2 is a plan view that shows part of a stator and a rotor with the peripheral structure thereof in the first embodiment;
Fig. 3 is a diagram that shows part of the stator core and the peripheral structure thereof viewed from the direction of an arrow A shown in Fig. 2;
Fig. 4 is a partially magnified view of Fig. 2;
Fig. 5 is a configuration diagram of a control system of the motor device according to the first embodiment;
Figs. 6 are diagrams that chronologically show a method of changing the energization states of coils in the first embodiment;
Fig. 7 is a plan view that shows part of a stator and a rotor with the peripheral structure thereof in a second embodiment; and
Fig. 8 is a sectional view taken along line B-B in Fig. 7.

In the following embodiments and modifications, like reference characters designate like constituent elements, and the description thereof will not be repeated. Also, in each drawing, part of the constituent elements may be omitted, or the size of a constituent element may be appropriately enlarged or reduced, for the sake of convenience. Further, constituent elements having a feature in common may be distinguished from each other by adding characters at the end of the reference numerals thereof, such as "-A, -B, -C", and such characters may be omitted when the constituent elements are collectively referred to.

### (First Embodiment)

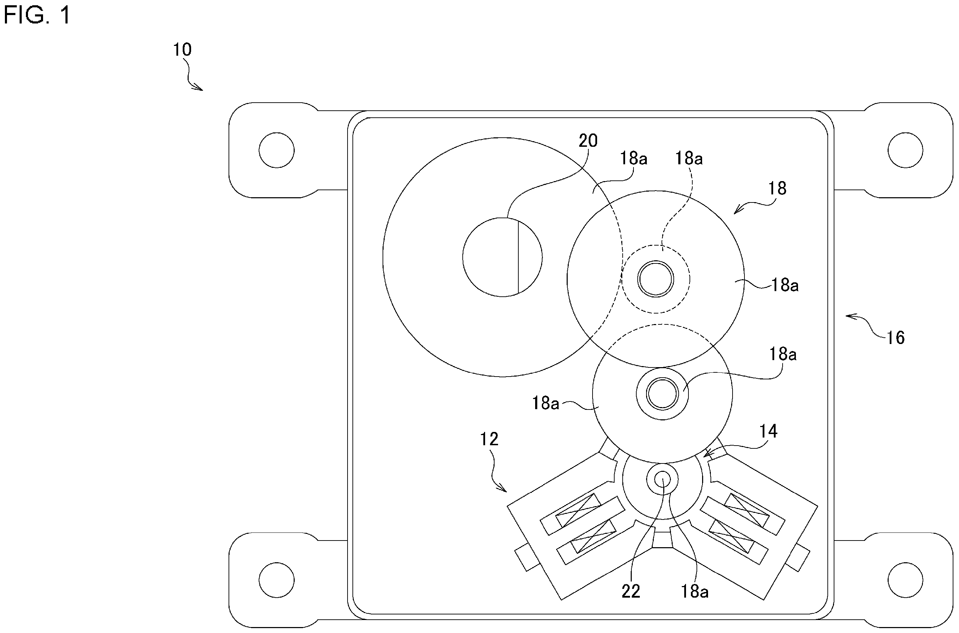

Fig. 1 is a plan view that shows an internal structure of a motor device 10 according to the first embodiment. The motor device 10 may be used to drive an external device, such as a power window, for example. The motor device 10 mainly comprises a stator 12, a rotor 14, a control unit (not illustrated), a housing 16, a reduction mechanism 18, and an output shaft 20. The motor device 10 of the present embodiment functions as a stepping motor. The motor device 10 of the present embodiment also functions as an actuator that reduces rotative power of the rotor 14 and outputs the rotative power from the output shaft 20 to an external device. The stator 12, rotor 14, and control unit will be detailed later.

The housing 16 houses the stator 12, the rotor 14, and the like. The housing 16 functions as a motor base that supports a stator core 26 (which will be described later) of the stator 12 and the rotor 14. The housing 16 also functions as a positioning structure that positions the stator core 26 in a direction (a circumferential direction and a radial direction) parallel with a plane orthogonal to a rotating shaft direction of the rotor 14. The housing 16 is a molding formed of a synthetic resin material or the like. The housing 16 is configured by fitting together a pair of housing members that each have a shape of a segmented housing 16 (Fig. 1 only shows a single housing member).

The reduction mechanism 18 is used to reduce rotative power input from the rotating shaft 22 (which will be described later) of the rotor 14 and transmit the rotative power to the output shaft 20. The reduction mechanism 18 is constituted by multiple gears 18a. In Fig. 1, the teeth of the gears 18a are omitted, and the pitch circles are indicated by solid lines.

The output shaft 20 is used to output rotative power transmitted from the rotor 14 through the reduction mechanism 18. The output shaft 20 is rotatably supported by the housing 16.

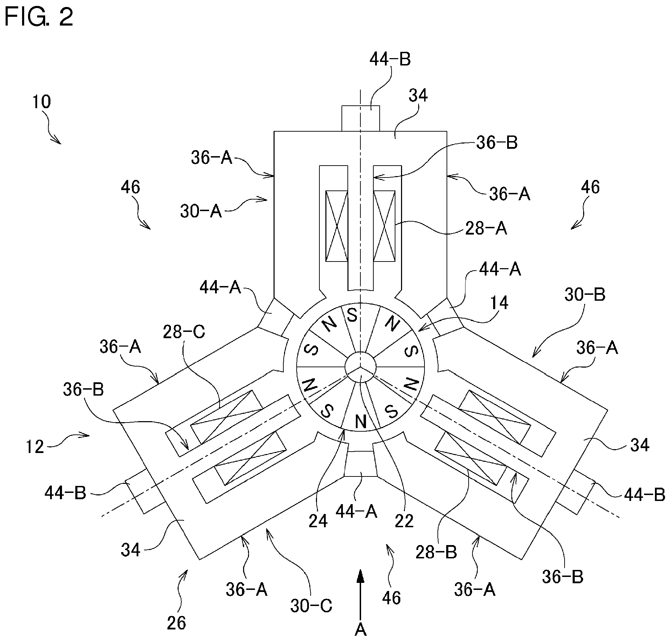

Fig. 2 is a plan view that shows part of the stator 12 and the rotor 14 with the peripheral structure thereof. The rotor 14 is an inner rotor, and the stator 12 is disposed on the outer peripheral side of the rotor 14. The rotor 14 includes the rotating shaft 22 rotatably supported by the housing 16, and a magnet 24 that is rotatable together with the rotating shaft 22. In the following, the positional relationships of the constituent elements will be described based on a rotating shaft direction, a circumferential direction, and a radial direction of the rotor 14.

The magnet 24 of the present embodiment has a ring shape that extends in a rotating shaft direction of the rotor 14. The magnet 24 is magnetized so that south poles and north poles are alternately arranged in a circumferential direction along the outer peripheral surface that radially faces the stator 12. The magnetic poles of the magnet 24 are arranged at a pitch of a predetermined angle around the rotating shaft of the rotor 14. In the present embodiment, the magnetic poles are arranged at a pitch of 36 degrees, so that the number of poles of the rotor 14 is ten, i.e., an even number.

The stator 12 includes the stator core 26, and coils 28 of multiple phases wound around part of the stator core 26. The stator core 26 is constituted by multiple core members 30 arranged around the rotor 14 in circumferential directions. In the present embodiment, the stator core 26 is constituted by three core members 30. In the following, the core member 30 positioned on the top in the figures will be referred to as a first core member 30-A, and the other core members 30 subsequent to the first core member 30-A in the clockwise direction will be serially referred to as a second core member 30-B and a third core member 30-C, for the sake of convenience.

The multiple core members 30 are sandwiched between the pair of housing members, which constitute the housing 16, to be fixed to the housing 16. In the present embodiment, each of the multiple core members 30 has the same shape.

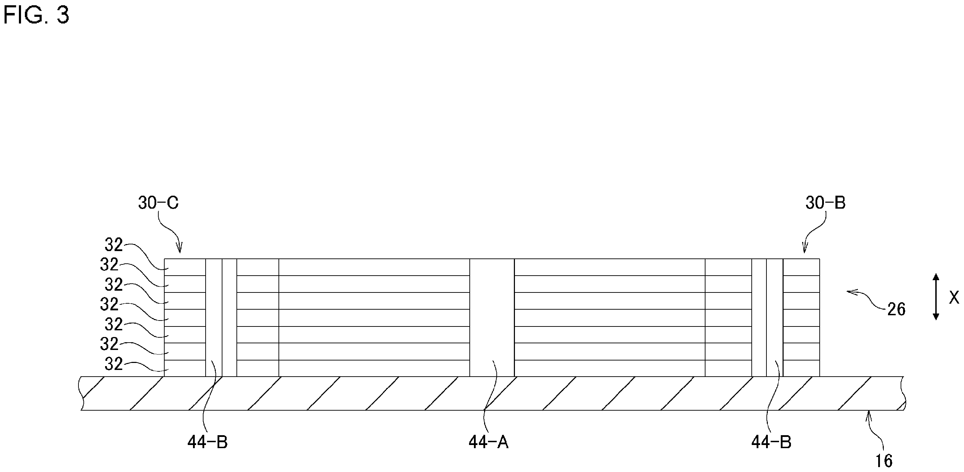

Fig. 3 is a diagram that shows part of the stator core 26 and the peripheral structure thereof viewed from the direction of the arrow A shown in Fig. 2. The core members 30 of the present embodiment include multiple core plates 32 laminated in a rotating shaft direction X of the rotor 14. The multiple core plates 32 are integrally formed by caulking, welding, or the like. The core plates 32 are made of a magnetic material, such as magnetic steel sheets.

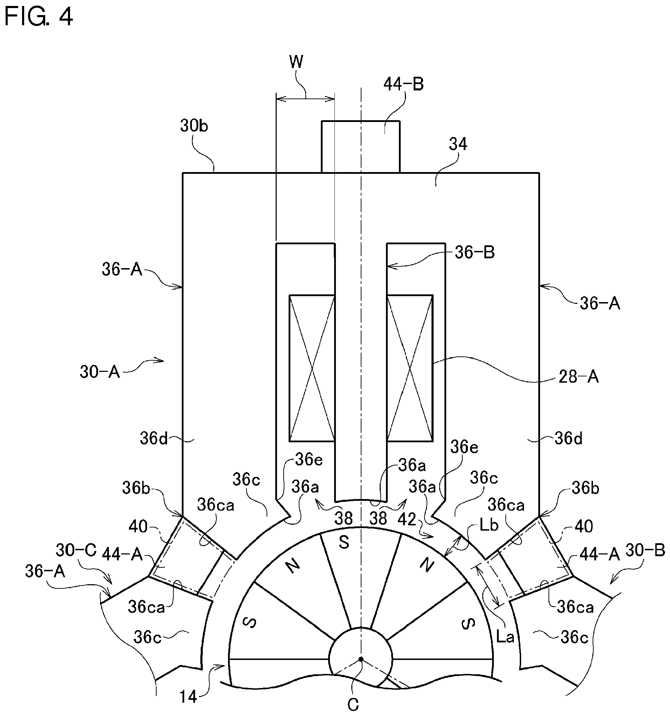

Fig. 4 is a partially magnified view of Fig. 2. A core member 30 includes a circumferential part 34 that extends in a circumferential direction of the rotor 14, and multiple teeth parts 36 that protrude in the radial direction from the circumferential part 34 toward the rotor 14. A front end surface 36a of each of the multiple teeth parts 36 radially faces the rotor 14.

The front end surfaces 36a of all the teeth parts 36 of the stator core 26 are arranged at a pitch of a predetermined angle around the rotational center of the rotor 14. In the present embodiment, the front end surfaces 36a of all the teeth parts 36 are arranged at a pitch of 40 degrees, so that the number of poles of the stator 12 is nine, i.e., an odd number (see also Fig. 2).

The teeth parts 36 include a first teeth part 36-A that is adjacent to a teeth part 36 of another core member 30 in a circumferential direction, and a second teeth part 36-B forming a slot part 38 between the first teeth part 36-A. The first teeth part 36-A of the present embodiment protrudes from each of the both end parts, in a circumferential direction, of the circumferential part 34 of the core member 30. The second teeth part 36-B of the present embodiment protrudes from a middle part in a circumferential direction of the circumferential part 34 of the core member 30. A coil 28 is not wound around the first teeth part 36-A but is wound around the second teeth part 36-B.

In the first teeth part 36-A, a bent part 36b is provided midway between the base end part and the front end surface, and the first teeth part 36-A is bent at the bent part 36b in a direction that narrows the width of the slot part 38. The first teeth part 36-A includes a front-end-side part 36c located on the front end side of the bent part 36b, and a base-end-side part 36d located on the base end side of the bent part 36b.

The front-end-side part 36c of the first teeth part 36-A extends toward the rotational center C of the rotor 14. The base-end-side part 36d of the first teeth part 36-A extends in parallel with the second teeth part 36-B. The width W of the slot part 38 between the base-end-side part 36d of the first teeth part 36-A and the second teeth part 36-B is set to a similar size in a depth direction of the slot part 38. The second teeth part 36-B linearly extends from the circumferential part 34 toward the rotational center C of the rotor 14. The width of the first teeth part 36-A is set to be larger than the width of the second teeth part 36-B. Accordingly, the arc length of the front end surface 36a of the first teeth part 36-A is set to be larger than the arc length of the front end surface 36a of the second teeth part 36-B.

The multiple core members 30 are arranged to be spaced apart from each other in the circumferential directions, and a gap 40 is formed between core members 30 adjacent to each other in the circumferential directions. In the present embodiment, the gap 40 is formed between side surfaces 36ca of the front-end-side parts 36c of first teeth parts 36-A of core members 30 adjacent to each other. The size La of the narrowest part of the gap 40 (size of the radially innermost side) is set to be larger than the size Lb in a radial direction of an air gap 42, which is formed between the outer peripheral surface of the rotor 14 and the front end surface 36a of a teeth part 36 of the stator 12.

As shown in Figs. 3 and 4, the housing 16 includes multiple positioner parts 44 that abut against the multiple core members 30 in order to position them. Each of the positioner parts 44 of the present embodiment is a columnar projection that projects from the inner surface of the housing 16 in the rotating shaft direction X.

The multiple positioner parts 44 include a first positioner part 44-A that abuts against a first teeth part 36-A of each of core members 30 adjacent to each other in the circumferential directions, and a second positioner part 44-B that abuts against an outer peripheral surface 30b of a core member 30 provided on the side opposite to the rotor 14 in a radial direction. Each of the positioner parts 44 abuts against an outer surface of a core member 30. In the present specification, an "outer surface" of a core member 30 means a surface that forms the outer shape of the core member 30 and excludes a surface that forms an aperture of a closed cross-section of the core member 30. The first positioner part 44-A is provided at each position between the multiple core members 30. Each of the positioner parts 44 abuts against all of the multiple core plates 32 of a core member 30.

In the present embodiment, at least three of the multiple positioner parts 44 are provided for one core member 30. The three positioner parts 44 for a core member 30 are two first positioner parts 44-A and one second positioner part 44-B. The two first positioner parts 44-A include a first positioner part 44-A arranged between one core member 30 and another core member 30 adjacent to the one core member 30 in the clockwise direction (one circumferential direction), and a first positioner part 44-A arranged between the one core member 30 and yet another core member 30 adjacent to the one core member 30 in the counterclockwise direction (the other circumferential direction). A core member 30 is press-fitted (force-fitted) inside the three positioner parts 44 for the core member 30.

The two first positioner parts 44-A for a core member 30 respectively abut against the front end parts of the two first teeth parts 36-A of the core member 30. More specifically, the two first positioner parts 44-A respectively abut against the side surfaces 36ca of the front-end-side parts 36c of the two first teeth parts 36-A of the core member 30. Accordingly, the two first positioner parts 44-A position the core member 30 in the both circumferential directions so as to control displacement of the core member 30 in the both circumferential directions. The two first positioner parts 44-A also position the core member 30 in a radial direction so as to control displacement of the core member 30 in the radial direction toward the rotor 14.

The second positioner part 44-B abuts against the outer peripheral surface 30b of the core member 30 on the side opposite to the rotor 14 in a radial direction and positions the core member 30 in a radial direction so as to control displacement of the core member 30 in the radial direction away from the rotor 14.

Thus, the multiple positioner parts 44 for a core member 30 position the core member 30 in the circumferential directions and radial directions so as to control displacement of the core member 30 in the circumferential directions and radial directions.

As shown in Fig. 2, the number of the core members 30, defined as n (n is a natural number larger than or equal to three), used in the present embodiment is three. The multiple positioner parts 44 include three first positioner parts 44-A and three second positioner parts 44-B. The three core members 30 are positioned in the circumferential directions and radial directions of the rotor 14 by the three first positioner parts 44-A and three second positioner parts 44-B.

Among the three positioner parts 44 provided for one core member 30, the two first positioner parts 44-A serve dually as those for other core members 30 adjacent to the one core member 30 in the circumferential directions, respectively. For example, one first positioner part 44-A provided for the first core member 30-A serves dually as a first positioner part 44-A for the second core member 30-B adjacent to the first core member 30-A in the clockwise direction. Also, the other first positioner part 44-A provided for the first core member 30-A serves dually as a first positioner part 44-A for the third core member 30-C adjacent to the first core member 30-A in the counterclockwise direction.

Spaces 46 provided radially outside the first positioner parts 44-A are used for spaces where members other than the stator 12 and the rotor 14 are arranged.

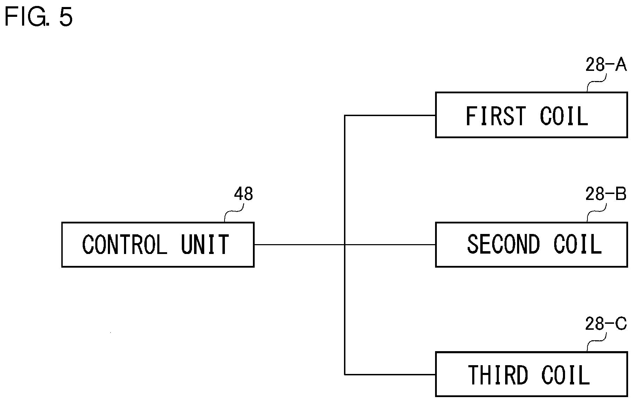

Fig. 5 is a configuration diagram of a control system of the motor device 10. The coils 28 of the present embodiment include a first coil 28-A of the first phase, a second coil 28-B of the second phase, and a third coil 28-C of the third phase, as shown in Figs. 2 and 5. The first coil 28-A is wound around the second teeth part 36-B of the first core member 30-A, the second coil 28-B is wound around the second teeth part 36-B of the second core member 30-B, and the third coil 28-C is wound around the second teeth part 36-B of the third core member 30-C.

A control unit 48 controls the energization states of the coils 28 of multiple phases. The control unit 48 of the present embodiment is a drive circuit that energizes the coils 28 of multiple phases using a predetermined excitation method, according to a pulse signal input from an upper external control device. The control unit 48 is provided on a circuit board (not illustrated) housed within the housing 16. The control unit 48 is supplied with electric power from an external power supply (not illustrated) and energizes the coils 28 of multiple phases using the electric power.

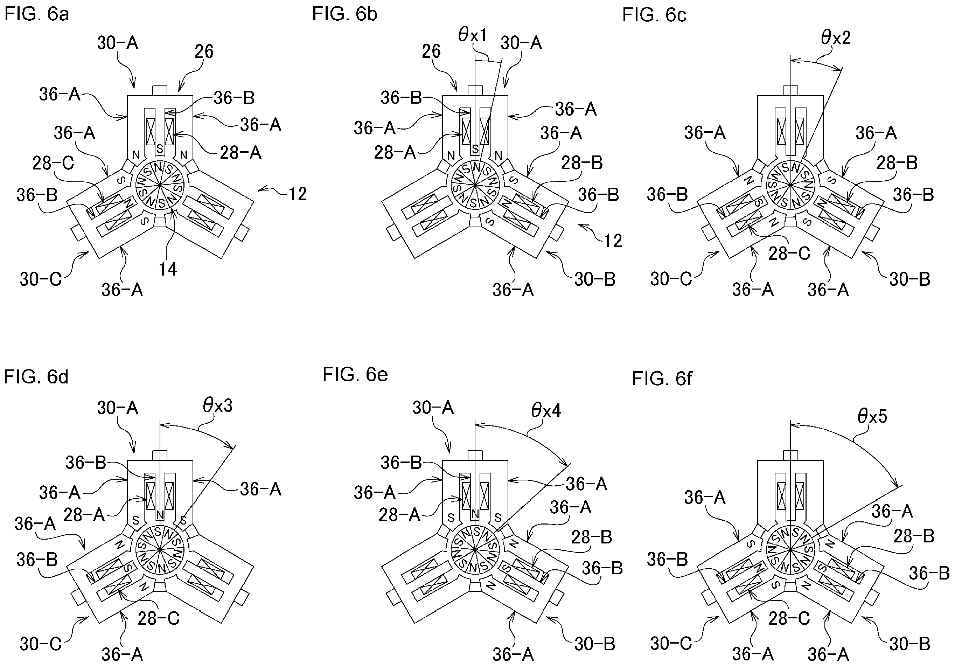

Figs. 6(a)-6(f) are diagrams that chronologically show a method of changing the energization states of the coils 28 performed by the control unit 48. Figs. 6(b)-6(f) also show angular variations from the energization state of Fig. 6(a). The control unit 48 of the present embodiment energizes the coils 28 of multiple phases using a 2-phase excitation method. In this excitation method, each time a pulse signal is input from an external control device, the energization state of each of the coils 28 of multiple phases is switched.

More specifically, each time a pulse signal is input, the control unit 48 switches the energization states of the coils 28 of multiple phases so that the coils 28 to be energized are shifted by one phase in a rotational direction (the clockwise direction in this example) of the rotor 14. For example, when a pulse signal is input while the first coil 28-A and the third coil 28-C are energized, as shown in Fig. 6(a), the control unit 48 switches the energization targets to the first coil 28-A and the second coil 28-B, as shown in Fig. 6(b).

At the time when the control unit 48 switches the energization states, there are a coil 28 of which the energized state is maintained (hereinafter, referred to as the energization maintaining coil) and a coil that is newly switched to the energized state (hereinafter, referred to as the energization starting coil). In the example of switching the state of Fig. 6(a) to the state of Fig. 6(b), the first coil 28-A is the energization maintaining coil, and the second coil 28-B is the energization starting coil. The control unit 48 of the present embodiment controls so that the energizing direction of the energization maintaining coil {the first coil 28-A in Figs. 6(a) and 6(b), for example} is not changed at the time of switching the energization states. Also, the control unit 48 of the present embodiment controls the energizing direction of the energization starting coil so that, by excitation, the second teeth part 36-B around which the energization starting coil is wound has a magnetic pole different from that of the second teeth part 36-B around which the energization maintaining coil is wound. In the example of switching the state of Fig. 6(a) to the state of Fig. 6(b), the control unit 48 controls the energizing direction of the second coil 28-B so that, by excitation, the second teeth part 36-B around which the second coil 28-B is wound has a magnetic pole (north pole) different from the magnetic pole (south pole) of the second teeth part 36-B around which the first coil 28-A is wound.

Accordingly, around part of the multiple teeth parts 36 of the stator core 26, magnetic field for rotating the rotor 14 by a step angle θ, which is specific to the stator 12 and the rotor 14, is generated. Owing to the magnetic field generated by the stator core 26, the rotor 14 rotates by the step angle θ. Each time a pulse signal is input from an external control device, the control unit 48 switches the energization states of the coils 28 of multiple phases, so as to rotate the rotor 14 by a corresponding number of step angles θ proportional to the number of input pulse signals.

The control unit 48 energizes the coils 28 of part of the multiple phases and does not energize the coils 28 of the remaining phases. For example, when energizing the first coil 28-A of the first phase and the third coil 28-C of the third phase, the control unit 48 of the present embodiment does not energize the second coil 28-B of the second phase, as shown in Fig. 6(a). The teeth parts 36 of the first core member 30-A in which the first coil 28-A is wound and the teeth parts 36 of the third core member 30-C in which the third coil 28-C is wound are excited so that different magnetic poles are arranged side by side in a circumferential direction. The teeth parts 36 of the second core member 30-B in which the second coil 28-B is wound are not excited and have no magnetic poles. In this way, the control unit 48 energizes the coils 28 using the excitation method of energizing the coils 28 of part of the multiple phases, so as to rotate the rotor 14.

There will now be described effects of the motor device 10 set forth above.

When different magnetic poles are formed by excitation at the front end parts of the adjacent teeth parts 36 of adjacent core members 30, as stated previously, attraction (magnetic force) acts therebetween, with which the front end parts attract each other. For example, it is assumed here that the first positioner part 44-A is not provided between the teeth parts 36 of the adjacent core members 30. In this case, the attraction acting on the teeth parts 36 of the adjacent core members 30 may cause relative displacement of the teeth parts 36 such that they are brought closer to each other, so that the gap 40 between the front end parts of the teeth parts 36 may be narrowed. If the gap 40 is narrowed, leakage flux passing between the teeth parts 36 of the adjacent core members 30 may be increased, so that the torque output by the rotor 14 may be reduced.

In the present embodiment, however, the first positioner part 44-A is provided and abuts against the front end parts of the teeth parts 36 of the adjacent core members 30. Accordingly, relative displacement of the teeth parts 36 of the adjacent core members 30 such that they are brought closer to each other, caused by the attraction acting on the teeth parts 36, can be certainly prevented. Therefore, the gaps 40 between the multiple core members 30 can be prevented from narrowing, and the sizes of the gaps 40 can be suitably managed.

Also, when the core members 30 are positioned, there can be considered another method in which holes are provided in part of the core members 30, and pin-shaped positioner parts are inserted through the holes, so that the positioner parts abut against the inner surfaces, instead of the outer surfaces, of the core members 30. However, in the present embodiment, each of the first positioner parts 44-A abuts against the outer surfaces of the front end parts of the teeth parts 36 of adjacent core members 30, thereby preventing relative displacement of the adjacent core members 30 such that they are brought closer to each other, without providing holes in the core members 30. Therefore, the process for providing holes in the core members 30 is unnecessary, and a decrease in the yield caused by the process can be prevented while the sizes of the gaps 40 can be suitably managed, as stated previously.

The first positioner parts 44-A include a first positioner part 44-A arranged between one core member 30 and another core member 30 adjacent to the one core member 30 in the clockwise direction, and a first positioner part 44-A arranged between the one core member 30 and yet another core member 30 adjacent to the one core member 30 in the counterclockwise direction. Accordingly, even if attraction acts between one core member 30 and either of the core members 30 adjacent to the one core member 30 in the circumferential directions, the gap 40 between the one core member 30 and the adjacent core member 30 can be prevented from narrowing.

Also, the multiple positioner parts 44 for a core member 30 position the core member 30 in the radial directions so as to control displacement of the core member 30 in both the radial directions. Accordingly, the size of an air gap 42 (size Lb in Fig. 4) between a core member 30 and the rotor 13 can be accurately managed, thereby preventing non-uniformity in torque caused by a variation of the size.

Also, attraction or repulsion as magnetic force acts between the teeth parts 36 of a core member 30 and the rotor 14, so that the core member 30 is to be displaced relative to the rotor 14 because of the magnetic force. Meanwhile, the first positioner parts 44-A each abut against the front end part of a first teeth part 36-A of the core member 30, which is a part on which the magnetic force acts, so that each of the first positioner parts 44-A positions the core member 30 at a position near a point where the magnetic force acts. Accordingly, compared to the case where the core member 30 is positioned at a position distant from the point where the magnetic force acts, there is the advantage that backlash of the core member 30 caused by the magnetic force acting between the core member 30 and the rotor 14 is more preventable.

Also, since a core member 30 is press-fitted inside multiple positioner parts 44 for the core member 30, the degree of fixation to the housing 16 is improved. Accordingly, even if vibration is input to the core member 30, a change of the position of the core member 30 with respect to the rotor 14 will be more preventable, so that a change of the size of the air gap 42 between the core member 30 and the rotor 14 can be prevented, and the torque characteristics and other performance capabilities can be ensured more easily.

Also, the three core members 30 are positioned in the circumferential directions and radial directions of the rotor 14 by the three first positioner parts 44-A and three second positioner parts 44-B. Accordingly, the three core members 30 can be positioned in the circumferential directions and radial directions, using the fewer positioner parts 44 for the positioning. Especially, there is the advantage that the number of positioner parts 44 used for the positioning can be made fewer without performing the process for providing holes in the core members 30.

In each of the first teeth parts 36-A of adjacent core members 30, the bent part 36b, bent in a direction that narrows a slot part 38, is provided, and a first positioner part 44-A abuts against the side surface of the front-end-side part 36c, located on the front end side of the bent part 36b, of the first teeth part 36-A. Accordingly, compared to the case where the first teeth parts 36-A do not have the bent parts 36b, the contact area between the first positioner part 44-A and each of the first teeth parts 36-A of the adjacent core members 30 can be ensured more easily, while the gap 40, having a larger size in a circumferential direction, can be ensured between the adjacent core members 30. Therefore, increase in leakage flux between the adjacent core members 30 can be prevented, while the degree of fixation of the core members 30 with respect to the housing 16 can be improved.

Also, the width of the slot part 38 between the base-end-side part 36d of a first teeth part 36-A and a second teeth part 36-B is set to a similar size in a depth direction of the slot part 38. Accordingly, compared to the case where the width gradually increases in the depth direction, magnetic force is transmitted more easily through the space between the base part of the first teeth part 36-A and the base part of the second teeth part 36-B, so that the magnetomotive force of the core members 30 can be increased more easily.

Since the multiple core members 30 have the same shape, the magnetomotive force of each of the core members 30 can be equalized, and the number of necessary parts can be reduced, so that the management cost can also be reduced. Also, since the multiple core members 30 have the same shape, cogging torque can be reduced more easily.

### (Second Embodiment)

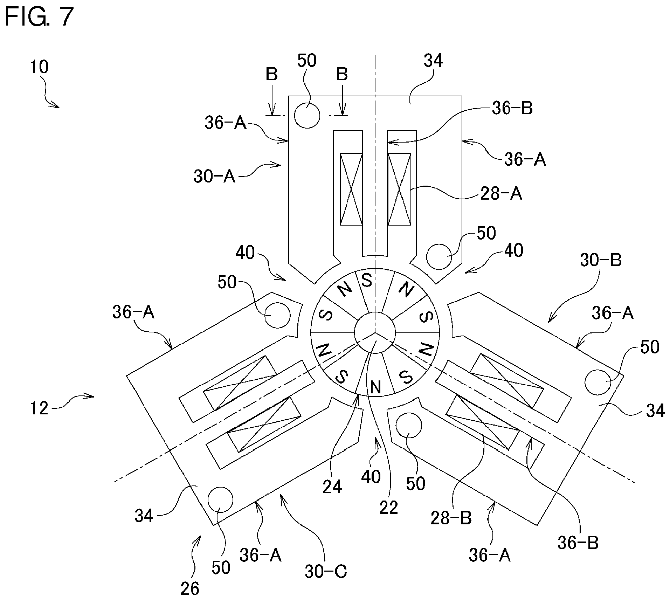

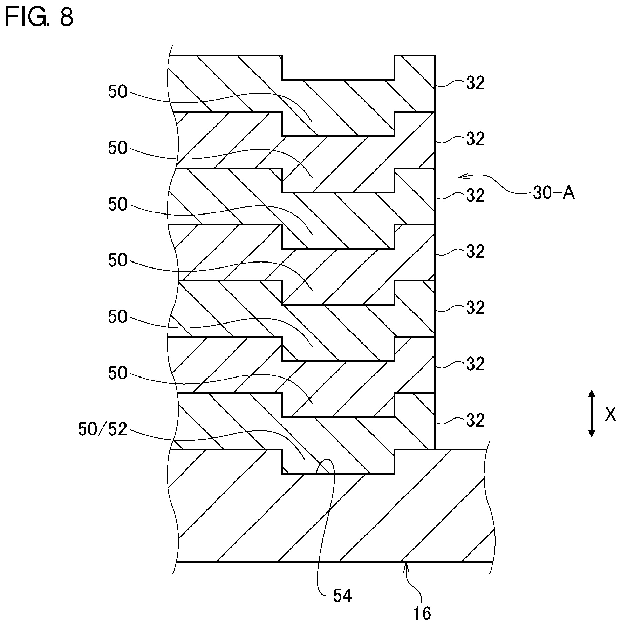

Fig. 7 is a plan view that shows part of the stator 12 and the rotor 14 with the peripheral structure thereof in the second embodiment. Fig. 8 is a sectional view taken along line B-B in Fig. 7. The motor device 10 of the second embodiment differs from that of the first embodiment in employing, as a configuration for positioning the stator core 26, a different configuration rather than the positioner parts 44 shown in Fig. 2.

On the multiple core plates 32 of a core member 30 of the second embodiment, caulking parts 50 are formed to unify the multiple core plates 32. The caulking parts 50 are formed by caulking so as to plastically deform part of the multiple core plates 32 in a rotating shaft direction X of the rotor 14. On the outermost core plate 32 (the lowest core plate 32 in Fig. 8) of the multiple core plates 32, the caulking part 50 is formed so as to project from the core plate 32 in the rotating shaft direction X.

The core members 30 of the second embodiment include multiple first fitting parts 52 formed as projections that project in the rotating shaft direction X of the rotor 14. A first fitting part 52 is the caulking part 50 of the outermost core plate 32 (the lowest core plate 32 in Fig. 8) of the multiple core plates 32 of a core member 30.

The housing 16 includes multiple second fitting parts 54 formed at positions corresponding to those of the first fitting parts 52 of the core members 30, respectively. The second fitting parts 54 of the present embodiment are formed on the inner surface of the housing 16, as recesses that are recessed in the rotating shaft direction X of the rotor 14. Into each of the multiple second fitting parts 54, a corresponding first fitting part 52 of a core member 30 is fitted. With the multiple second fitting parts 54 into which the multiple first fitting parts 52 are fitted, the core members 30 are positioned in the radial directions and circumferential directions of the rotor 14.

In the motor device 10 of the present embodiment, the core members 30 can be positioned by fitting the first fitting parts 52 of the core members 30 into the second fitting parts 54 of the housing 16. The core members 30 can also be positioned by the caulking parts 50 that unify the multiple core plates 32. Accordingly, there is no need to provide the core members 30 with other parts for positioning the core members 30, and the number of manhours for processing can be reduced, so that the product cost can also be reduced.

The present invention has been described with reference to embodiments, which merely describe principles and applications of the present invention. Also, various modifications or changes in arrangement may be made to the embodiments without departing from the scope of ideas of the invention defined in claims.

Although an actuator comprising the reduction mechanism 18 and output shaft 20 besides the stator 12, rotor 14, and housing 16 has been described as an example of the motor device 10, the configuration is not limited thereto. For example, the motor device 10 need not necessarily include the reduction mechanism 18 and the output shaft 20.

In the embodiments, although the housing 16 has been described as an example of the positioning structure for positioning the stator core 26, the positioning structure is not limited thereto. For example, the positioning structure may be a circuit board housed within the housing 16.

Although an example has been described in which the stator core 26 is constituted by a laminated body of multiple core plates, the structure is not limited thereto. For example, the stator core 26 may be constituted by a sintered body, such as sintered ferrite.

Although an example has been described in which three core members 30 are arranged, the number of the core members 30 is not particularly limited and may also be four or above. When the number of the core members 30 is defined as n, n core members 30 may be positioned in the circumferential directions and radial directions of the rotor 14 by n first positioner parts 44-A and n second positioner parts 44-B.

With regard to the multiple positioner parts 44, although an example has been described in which three positioner parts 44 are provided for one core member 30, the number of positioner parts provided for one core member 30 is not particularly limited. Also, when a core member 30 is press-fitted inside multiple positioner parts 44, it is acceptable as long as at least three positioner parts 44 are provided for one core member 30.

The first positioner parts 44-A may be formed of a material having magnetic permeability lower than that of air. Accordingly, leakage flux through the gaps 40 between the teeth parts 36 of adjacent core members 30 can be effectively reduced, contributing increase in torque output by the rotor 14.

As shown in Fig. 4, when the bent part 36b is provided in a first teeth part 36-A, an internal angle part 36e is provided at the boundary of the base-end-side part 36d and the front-end-side part 36c on the inner side of the first teeth part 36-A. Although an example has been described in the present embodiments in which the internal angle part 36e is provided in a part where the slot part 38 is formed between the first teeth part 36-A and the second teeth part 36-B, the internal angle part 36e may be provided in a part where the slot part 38 is not formed. More specifically, the internal angle part 36e may be provided at a position shifted in the longitudinal direction of the second teeth part 36-B, from a position corresponding to that of the front end surface 36a of the second teeth part 36-B toward the front end side (the lower side in Fig. 4) of the second teeth part 36-B. Even in this case, the width of the slot part 38 between the base-end-side part 36d of the first teeth part 36-A and the second teeth part 36-B may be set to a similar size in a depth direction of the slot part 38.

Although an example has been described in which the control unit 48 energizes the coils 28 of multiple phases using a 2-phase excitation method, the excitation method is not particularly limited. For example, it may be a 1-phase excitation method or a 1-2 phase excitation method.
- 10: motor device
- 12: stator
- 14: rotor
- 16: housing (positioning structure)
- 26: stator core
- 30: core member
- 36: teeth part
- 36-A: first teeth part
- 36-B: second teeth part
- 36a: front end surface
- 36b: bent part
- 36c: front-end-side part
- 36d: base-end-side part
- 38: slot part
- 44: positioner part
- 44-A: first positioner part

## Claims

1. A motor device (10), comprising:
a stator core (26); and
a positioning structure (16) that positions the stator core (26), wherein:
the stator core (26) is constituted by a plurality of core members (30) arranged around a rotor (14) in circumferential directions;
the core members (30) have a plurality of teeth parts (36) of which the front end surfaces (36a) radially face the rotor (14);
the positioning structure (16) includes a plurality of positioner parts (44) that respectively abut against the plurality of core members (30) to position the plurality of core members (30); and
the plurality of positioner parts (44) include first positioner parts (44-A) that each abut against a front end part of the teeth part (36) of each of the core members (30) adjacent to each other in the circumferential directions.

2. The motor device (10) of claim 1, wherein the first positioner parts (44-A) include a first positioner part (44-A) arranged between one of the core members (30) and another core member (30) adjacent to the one of the core members (30) in one of the circumferential directions, and a first positioner part (44-A) arranged between the one of the core members (30) and yet another core member (30) adjacent to the one of the core members (30) in the other of the circumferential directions.

3. The motor device (10) of claim 1 or 2, wherein:
at least three of the plurality of positioner parts (44) are provided for one of the core members (30); and
the core member (30) is press-fitted inside the positioner parts (44) provided for the core member (30).

4. The motor device (10) of any one of claims 1 through 3, wherein:
around the rotor (14), n (n is a natural number larger than or equal to three) core members (30) are arranged;
the plurality of positioner parts (44) include n first positioner parts (44-A) provided at each position between the plurality of core members (30), and n second positioner parts (44-B) that each control displacement of a corresponding core member (30) in the radial direction away from the rotor (14); and
the n core members (30) are positioned in the circumferential directions and radial directions of the rotor (14) by the n first positioner parts (44-A) and the n second positioner parts (44-B).

5. The motor device (10) of any one of claims 1 through 4, wherein:
the plurality of teeth parts (36) include a first teeth part (36-A) that is adjacent, in one of the circumferential direction, to a teeth part (36) of another core member (30), and a slot part (38) is formed between the first teeth part (36-A) and another teeth part (36) to which the first teeth part (36-A) is adjacent in the other of the circumferential direction;
in the first teeth part (36-A), a bent part (36b) is provided midway between the base end part and the front end surface, and the first teeth part (36-A) is bent at the bent part (36b) in a direction that narrows the width of the slot part (38); and
the first positioner part (44-A) abuts against a side surface of a front-end-side part (36c), located on the front end side of the bent part (36b), of the first teeth part (36-A).

6. The motor device (10) of claim 5, wherein:
the plurality of teeth parts (36) include a second teeth part (36-B), and
the slot part (38) is formed between the first teeth part (36-A) and the second teeth part (36-B); and
the width of the slot part (38) between a base-end-side part (36d), located on the base end side of the bent part (36b), of the first teeth part (36-A) and the second teeth part (36-B) is set to a similar size in a depth direction of the slot part (38).
